# EUROPÄISCHE PATENTSCHRIFT

(11) **EP 3 290 240 B1**
(45) Veröffentlichungstag und Bekanntmachung des Hinweises auf die Patenterteilung: **22.09.2021**
(21) Anmeldenummer: 17401093.4
(22) Anmeldetag: 24.08.2017
(51) Int. Cl.: B60G 5/04

(54) **LANDWIRTSCHAFTLICHE MASCHINE**
AGRICULTURAL MACHINE
ENGIN AGRICOLE

(30) Priorität: 01.09.2016 DE 102016116307
(43) Veröffentlichungstag der Anmeldung: 07.03.2018
(73) Patentinhaber: Amazonen-Werke H. Dreyer SE & Co. KG, 49205 Hasbergen (DE)
(72) Erfinder: EHLEN, Volker, 49205 Hasbergen (DE); VOTH, Robert, 49163 Bohmte (DE); SCHLÜTER, Jens, 32351 Stemwede (DE); KONERSMANN, Hendrik, 49170 Hagen a.T.W. (DE); AHRING, Gunnar, 49082 Osnabrück (DE)

(56) Entgegenhaltungen:
- EP-A1- 2 388 157
- DE-A1- 19 908 695
- DE-C2- 4 125 603

## Beschreibung

Die Erfindung betrifft eine landwirtschaftliche Maschine gemäß dem Oberbegriff des Patentanspruches 1.

Eine derartige landwirtschaftliche Maschine ist aus der EP 2 388 157 A1 bekannt. Eine weitere derartige landwirtschaftliche Maschine ist in der US 8 297 634 B2 beschrieben. Die landwirtschaftliche Maschine weist ein Fahrwerk auf, bei welchem die Laufräder einzeln mittels Laufradschwingen aufgehängt sind. Dazu sind die Laufradschwingen beidseitig der landwirtschaftlichen Maschine an Rahmenbauteilen in unabhängig aufrechter Ebene bewegbar angelenkt. Zur Verstellung der Spurbreite der landwirtschaftlichen Maschine sind die beidseitig angeordneten Rahmenbauteile mitsamt Laufradschwingen und Laufrädern bezüglich des mittig angeordneten Hauptrahmenteils in horizontaler Ebene quer zur Fahrtrichtung teleskopierbar. Nachteilig bei dieser beschriebenen Ausführung ist, dass die Laufräder links- und/oder rechtsseitig der landwirtschaftlichen Maschine über die jeweiligen Rahmenbauteile verbunden und nicht unabhängig in horizontaler Ebene bewegbar sind.

Eine unabhängige Bewegbarkeit der Laufräder in horizontaler Ebene wird beispielsweise in der DE 199 08 695 A1 beschrieben. Dazu sind die Laufräder der landwirtschaftlichen Maschine mittels Laufradschwingen außen am Rahmen der landwirtschaftlichen Maschine aufgehängt und die Laufradschwingen unabhängig voneinander quer zur Fahrtrichtung in horizontaler Ebene nach außen bezüglich des Rahmens teleskopierbar. Nachteilig bei dieser Ausführung ist, dass durch die einzelne Anlenkung der Laufradschwingen am Rahmen der landwirtschaftlichen Maschine über die Anlenkung der Laufradschwingen Kräfte in den Rahmen eingebracht werden und dadurch der Rahmen einer erhöhten mechanischen Belastung unterliegt. Die Anlenkung der Laufradschwingen ist auf der Außenseite des Rahmens vorgesehen. Eine Bewegung der Laufradschwingen quer zur Fahrtrichtung zur Veränderung der Spurbreite nur durch ein Teleskopieren nach außen möglich. Daher ist es bei der beschriebenen landwirtschaftlichen Maschine nicht möglich, dass die Laufräder eine Spurbreite einnehmen, welche geringer ist als die Breite des Rahmens der landwirtschaftlichen Maschine.

Der Erfindung liegt daher die Aufgabe zugrunde, ein kompaktes, leichtes sowie laufruhiges Fahrwerk zu schaffen, welches die Laufräder und den Rahmen der landwirtschaftlichen Maschine entkoppelt und zudem eine unabhängige Bewegung der Laufräder in aufrechter und horizontaler Ebene ermöglicht, wobei die Laufräder Positionen innerhalb der Rahmenbreite einnehmen können.

Die Aufgabe wird durch die kennzeichnenden Merkmale des Anspruchs 1 gelöst.

Durch diese Anordnung sind die Laufradschwingen entlang der Hauptgelenkwelle quer zur Fahrtrichtung bewegbar. Es wird ein Fahrwerk geschaffen, welches bei minimalem Materialaufwand eine hohe Stabilität aufweist und zudem sehr flexibel und beweglich ist. Es ist möglich, die Laufradschwingen entlang der Längsachse der Hauptschwenkwellen quer zur Fahrtrichtung zu verschieben. Dabei ist die minimale Spurbreite der Laufräder lediglich durch die Abmessungen der Laufradschwingen festgelegt. Eine Spurbreite unterhalb der Breite des Rahmens der landwirtschaftlichen Maschine ist somit sichergestellt. Zusätzlich können durch eine unabhängige Verschiebung der Laufradschwingen entlang der Hauptschwenkwellen beispielsweise asymmetrisch zur Mitte der landwirtschaftlichen Maschine positioniert sein.

Es wird ein besonderer Vorteil dadurch erreicht, dass jede Laufradschwinge in ihrem oberen Bereich einen Anlenkbereich aufweist, welcher die Hauptschwenkwelle umgreifend ausgebildet ist. Auf diese Weise wird die Laufradschwinge in einfacher Weise durch Aufschieben mit der Hauptschwenkwelle verbunden. Durch das Umgreifen der Hauptschwenkwelle mittels des Anlenkbereichs ist die Verbindung zwischen Laufradschwinge und Hauptschwenkwelle besonders stabil. Dennoch ist der Materialaufwand minimal. Zusätzlich ist durch Verschieben eine Bewegung der Laufradschwinge quer zur Fahrtrichtung entlang der Hauptschwenkwelle möglich.

Es ist von Vorteil, dass jede Laufradschwinge die Hauptschwenkwelle umgreifend an den Hauptschwenkwellen angelenkt und in aufrechter Ebene um die Hauptschwenkwelle verschwenkbar ist. Durch das Verschwenken der Laufradschwinge um die Hauptschwenkwelle wird die Bewegung der Laufradschwinge in aufrechter Ebene in besonders einfacher Weise erreicht. Zudem ist die schwenkbare Verbindung zwischen Laufradschwinge und Hauptschwenkwelle aufgrund des umgreifend ausgebildeten Anlenkbereichs besonders stabil und sicher.

Ein weiterer Vorteil wird dadurch erreicht, dass jede Laufradschwinge unabhängig entlang der Hauptschwenkwelle verschiebbar gelagert ist. Die Laufradschwingen sind durch Verschieben entlang der Hauptschwenkwelle quer zur Fahrtrichtung verschiebbar. Die Verschiebung wird mittels geeigneter Stellmittel erreicht. Durch eine geeignete Ansteuerung der Stellmittel ist eine unabhängige Bewegung jeder Laufradschwinge möglich. Eine unabhängige Bewegung jeder Laufradschwinge ermöglicht eine besonders hohe Flexibilität des Fahrwerks. Beispielsweise kann auf diese Weise jedes Laufrad bei Bedarf eine eigene Spur auf der Nutzfläche befahren, um dadurch den auf den Erdboden wirkenden Druck zu minimieren.

Es wird ein besonderer Vorteil dadurch erreicht, dass geeignete Stellmittel vorgesehen sind, um den Abstand der Laufräder relativ zum Rahmen in aufrechter und/oder horizontaler Richtung einzustellen. Mithilfe derartiger Stellmittel, welche beispielsweise als Hydraulikzylinder ausgeführt sind, lassen sich die gewünschten Abstände der Laufräder relativ zum Rahmen in aufrechter und horizontaler Richtung komfortabel einstellen. Zudem ist bei geeigneter Ansteuerung der Stellmittel eine automatisierte Einstellung der Abstände der Laufräder relativ zum Rahmen möglich. Eine automatisierte Einstellung der Abstände der Laufräder relativ zum Rahmen ermöglicht eine Regelung der Abstände der Laufräder, beispielsweise bei unebenem und/oder geneigtem Erdboden.

Durch diese Maßnahme ist sichergestellt, dass Neigungen und Unebenheiten des Geländes zuverlässig ausgeglichen werden. Die Stellmittel zur Bewegung der Laufradschwingen in horizontaler Ebene ermöglichen die Einstellung verschiedener Spurweiten und somit die Nutzung verschiedener Fahrgassensysteme.

Zusätzlich lässt sich durch eine geeignete Wahl der Spurweite der Laufräder der auf den Erdboden ausgeübte Druck minimieren.

Es ist von Vorteil, dass die quer zur Fahrtrichtung angeordneten Hauptschwenkwellen miteinander verbunden sind. Durch diese Maßnahme wird ein Hohes Maß an Stabilität des Fahrwerks erreicht. Der Rahmen der landwirtschaftlichen Maschine wird mit den Hauptschwenkwellen verbunden und von diesen getragen. Durch eine Verbindung der Hauptschwenkwellen untereinander dient diese Verbindung im Zusammenwirken mit dem Rahmen der landwirtschaftlichen Maschine als tragendes, Stabilität gebendes Gerüst der landwirtschaftlichen Maschine.

Dabei ist es von besonderem Vorteil, dass zumindest jeweils zwei der quer zur Fahrtrichtung angeordneten Hauptschwenkwellen mittels einer Bodenplatte verwindungsfest miteinander verbunden sind. Durch eine verwindungsfeste Verbindung zwischen den Hauptschwenkwellen ist eine Relativbewegung zwischen den Hauptschwenkwellen im Wesentlichen ausgeschlossen. Somit wird die Stabilität des Fahrwerks durch diese Maßnahme deutlich erhöht. Unebenheiten und/oder Schräglagen der landwirtschaftlichen Maschine werden durch die in aufrechter und horizontaler Ebene beweglich gelagerten Laufradschwingen ausgeglichen. Dadurch wird ein möglichst laufruhiges Fahrwerk geschaffen, welches den Rahmen der landwirtschaftlichen Maschine sicher trägt.

Es ist vorteilhaft, dass die Bodenplatte zumindest einen Teil des Unterbodens darstellt. Insbesondere ist die Bodenplatte und/oder der Unterboden im Wesentlichen hindernisfrei. Als Hindernisse werden Bauteilkanten, beispielsweise die quer zur Fahrtrichtung verlaufenden Hauptschwenkwellen, und/oder von Bauteilen gebildete Freiräume angesehen. Es besteht die Gefahr, dass sich zu überfahrende Pflanzen eines zu pflegenden Bestandes in diesen Freiräumen verfangen und/oder mit Bauteilkanten kollidieren und dabei wesentlich beschädigt werden. Durch einen im Wesentlichen hindernisfreien Unterboden, welcher zumindest teilweise durch die Bodenplatte gebildet wird, wird die Gefahr der Beschädigung von Pflanzen erheblich reduziert. Ertragseinbußen werden durch diese Maßnahme erfolgreich verringert.

Es ist weiterhin von Vorteil, dass zumindest jeweils zwei der quer zur Fahrtrichtung angeordneten Hauptschwenkwellen mittels einer Rahmenkonstruktion verwindungsfest miteinander verbunden sind. Die Rahmenkonstruktion kann alternativ oder zusätzlich zu der beschriebenen Bodenplatte der Verbindung zweier Hauptschwenkwellen dienen. Insbesondere die Nutzung der Rahmenkonstruktion zusätzlich zur Bodenplatte erhöht die Stabilität des Fahrwerks signifikant.

Es ist vorteilhaft, dass die in Fahrtrichtung vorderen und die in Fahrtrichtung hinteren Laufradschwingen jeweils paarweise auf einer gemeinsamen quer zur Fahrtrichtung angeordneten Hauptschwenkwelle angeordnet sind. Auf diese Weise wird ein, insbesondere mit vier Laufrädern ausgestattetes, Fahrwerk geschaffen, welches die beschriebenen Vorteile aufweist. Bei minimalem Materialaufwand weist das Fahrwerk eine hohe Stabilität sowie eine hohe Flexibilität auf und ist geeignet, in einfacher Weise bei verschiedenen Spurbreiten unebenes und/oder geneigtes Gelände auszugleichen. Zudem ist jedes Laufrad vermittels der ihm zugeordneten Laufradschwinge unabhängig in aufrechter und/oder horizontaler Ebene bewegbar.

Weitere Einzelheiten der Erfindung sind der Beispielsbeschreibung und den Zeichnungen zu entnehmen. Die Zeichnungen zeigen
- Fig.1: das Fahrwerk einer landwirtschaftlichen Maschine in perspektivischer Ansicht von schräg vorn,
- Fig.2: das Fahrwerk mit Rahmen einer landwirtschaftlichen Maschine in perspektivischer Ansicht von schräg vorn,
- Fig.3: das Fahrwerk einer landwirtschaftlichen Maschine in perspektivischer Ansicht von oben,
- Fig.4: das Fahrwerk einer landwirtschaftlichen Maschine in Draufsicht von oben,
- Fig.5: das Fahrwerk einer landwirtschaftlichen Maschine in seitlicher Ansicht und
- Fig.6: das ausgelenkte Fahrwerk einer landwirtschaftlichen Maschine in seitlicher Ansicht.

Landwirtschaftliche Maschinen sind für den Arbeitseinsatz auf landwirtschaftlichen Nutzflächen vorgesehen. Landwirtschaftliche Nutzflächen sind oft uneben. Insbesondere können sie Steigungen und Gefälle aufweisen.

Zusätzlich sind landwirtschaftliche Maschinen oftmals für Arbeiten, beispielsweise Pflegearbeiten, eines bestehenden Pflanzenbestandes vorgesehen, wobei der Pflanzenbestand überfahren werden muss. Die landwirtschaftliche Maschine muss in diesem Fall auch in einem sich in einer fortgeschrittenen Wachstumsphase befindlichen Pflanzenbestand eingesetzt werden können, ohne die zu überfahrenden Pflanzen wesentlich zu beschädigen. Beschädigungen der zu überfahrenden Pflanzen können dadurch auftreten, dass die zu überfahrenden Pflanzen mit Bauteilkanten der landwirtschaftlichen Maschine kollidieren und/oder sie sich in von Bauteilen der landwirtschaftlichen Maschine verfangen. In Pflanzenbeständen fortgeschrittenen Wachstums eingesetzte landwirtschaftliche Maschinen sind beispielsweise Pflanzenschutzspritzen und/oder Düngerstreuer.

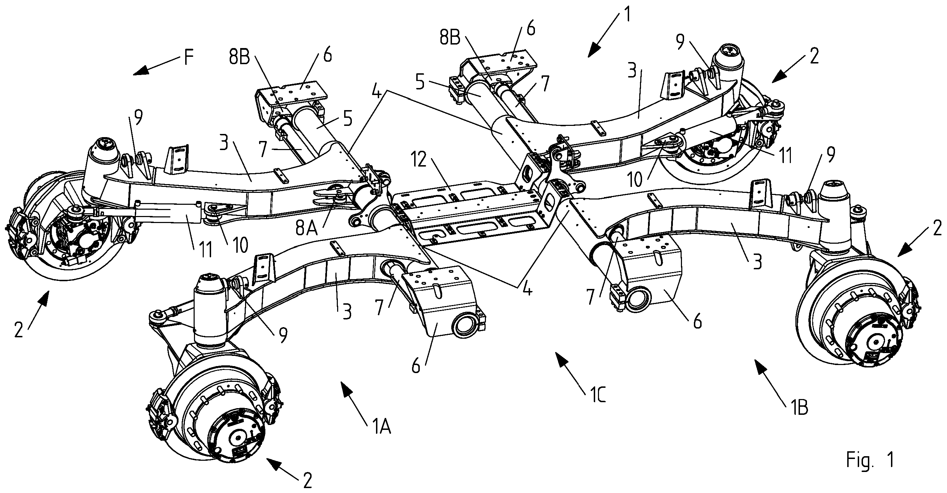

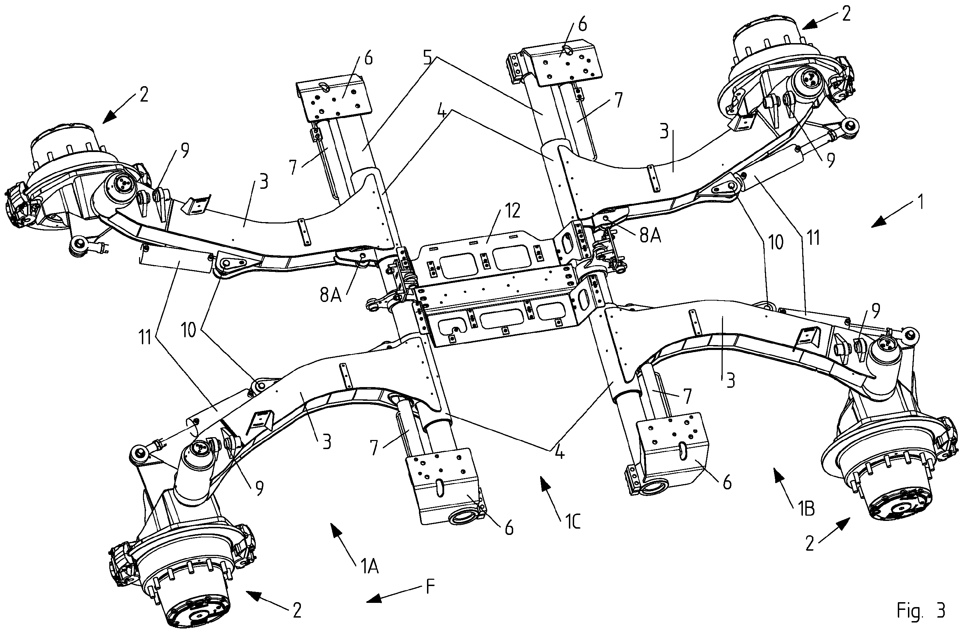

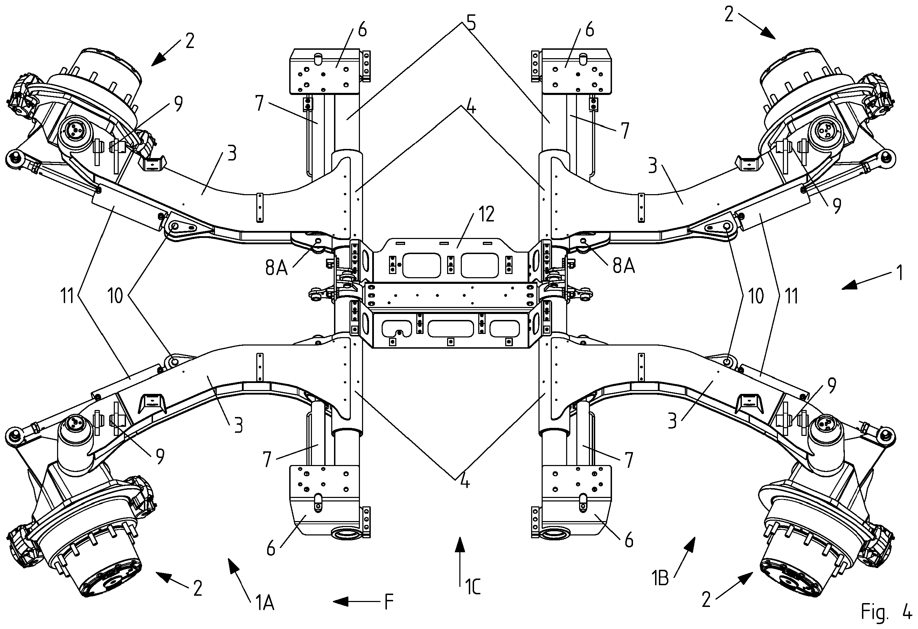

Zur Bewältigung der beschriebenen Aufgaben umfasst eine landwirtschaftliche Maschine oftmals ein Fahrwerk 1, welches eine hohe Bodenfreiheit aufweist. Beispielhaft für ein derartiges Fahrwerk 1 ist in den Fig. 1 bis 6 das Fahrwerk einer selbstfahrenden Pflanzenschutzspritze dargestellt.

Das Fahrwerk 1 umfasst im gewählten Beispiel vier nicht dargestellte Laufräder, welche über Radnaben 2 mit jeweils einer einzelnen Laufradschwinge 3 verbunden sind. Die Laufradschwingen 3 sind im Wesentlichen entlang der Fahrtrichtung F der landwirtschaftlichen Maschine orientiert. In ihrem oberen Bereich weisen die Laufradschwingen 3 einen Anlenkbereich 4 auf. Der Anlenkbereich 4 der Laufradschwingen 3 ist derart ausgebildet, dass er eine quer zur Fahrtrichtung F angeordnete Hauptschwenkwelle 5 umfasst, wie es in den Fig. 1 bis 6 gezeigt ist.

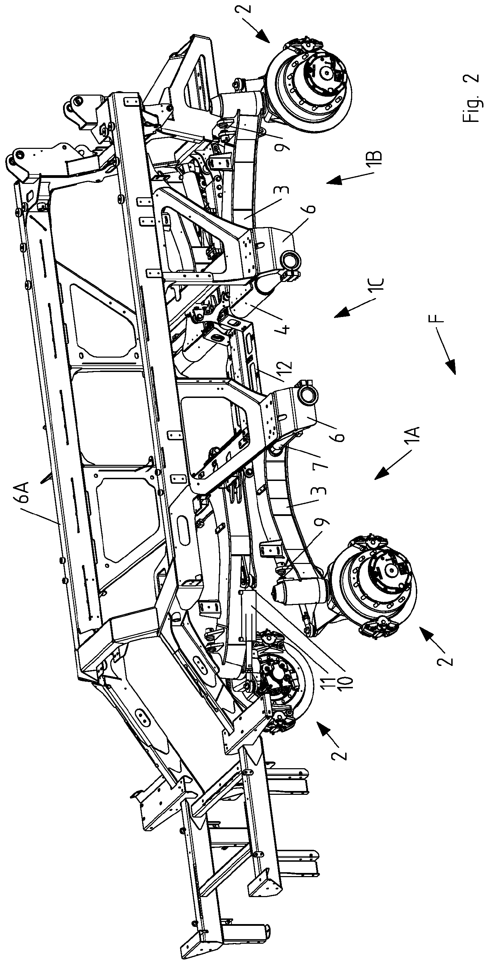

Das Fahrwerk 1 umfasst zwei Hauptschwenkwellen 5. Die Hauptschwenkwellen 5 sind quer zur Fahrtrichtung F angeordnet und durchgehend ausgeführt. An ihren von der Mitte der landwirtschaftlichen Maschine aus gesehen äußeren Enden weisen sie Verbindungsbauteile 6 auf. Die Verbindungsbauteile 6 sind zur Verbindung des Fahrwerks 1 mit einem Rahmen 6A der landwirtschaftlichen Maschine vorgesehen. Somit stützt sich der Rahmen 6A der landwirtschaftlichen Maschine vermittels der Verbindungsbauteile 6 auf dem Fahrwerk 1 ab, wie es in Fig. 2 gezeigt ist. Der Rahmen 6A ist mittels geeigneter Befestigungselemente an den Verbindungsbauteilen 6 befestigt.

Durch den die Hauptschwenkwellen 5 umgreifend ausgebildeten Anlenkbereich 4 der Laufradschwingen 3 sind die Laufradschwingen 3 um die quer zur Fahrtrichtung F verlaufenden Längsachse der Hauptschwenkwellen 5 verschwenkbar. Die Verschwenkbarkeit der Laufradschwingen 3 um die Längsachse der Hauptschwenkwellen 5 ermöglicht eine Bewegung der Laufräder in aufrechter Ebene relativ zum Rahmen 6A der landwirtschaftlichen Maschine. Zusätzlich ermöglicht der die Hauptschwenkwellen 5 umgreifend ausgebildete Anlenkbereich 4 ein Verschieben der Laufradschwingen 3 entlang der Hauptschwenkwellen 5 und damit eine Bewegung der Laufräder quer zur Fahrtrichtung F in horizontaler Ebene relativ zum Rahmen 6A der landwirtschaftlichen Maschine.

Die Bewegung der Laufräder und/oder der Laufradschwingen 3 in horizontaler Ebene relativ zum Rahmen 6A der landwirtschaftlichen Maschine wird mittels geeigneter Stellelemente erreicht. Die Stellelemente sind vorzugsweise als Hydraulikzylinder 7 ausgeführt. Die Hydraulikzylinder 7 sind quer zur Fahrtrichtung F parallel zu den Hauptschwenkwellen 5 zwischen den Verbindungsbauteilen 6 und dem Anlenkbereich 4 der Laufradschwingen 3 angeordnet. Die sich gegenüberliegenden Enden der Hydraulikzylinder 7 werden dazu an vorgesehenen Befestigungsvorrichtungen 8A,8B der Laufradschwingen 3 und der Verbindungsbauteile 6 befestigt. Die Hydraulikzylinder 7 sind in den Befestigungsvorrichtungen 8A,8B geeignet gelagert, um Schwenkbewegungen der Laufradschwingen um die Längsachse der Hauptschwenkwellen 5 zu folgen.

Durch eine geeignete Ansteuerung sind die Hydraulikzylinder 7 unabhängig voneinander in ihrer Länge veränderlich und ermöglichen somit die Positionierung jeder Laufradschwinge 3 in einem individuellen Abstand von der Mitte des Fahrwerks 1.

An ihren den Radnaben 2 zugewandten Enden weisen die Laufradschwingen 3 Befestigungsvorrichtungen 9 auf. Diese sind zur Befestigung eines ersten Endes von nicht dargestellten vorzugsweise als Hydraulikzylinder ausgeführten Stellelemente vorgesehen. Das dem ersten Ende gegenüberliegende zweite Ende der nicht dargestellten Hydraulikzylinder ist an dem Rahmen 6A der landwirtschaftlichen Maschine befestigt. Die Befestigung der gegenüberliegenden Enden der nicht dargestellten Hydraulikzylinder an den Befestigungsvorrichtungen 9 und dem Rahmen 6A der landwirtschaftlichen Maschine ist derart schwenkbar ausgeführt, dass Relativbewegungen in horizontaler Ebene zwischen Laufradschwingen 3 und dem Rahmen 6A der landwirtschaftlichen Maschine ausgleichbar sind.

Durch geeignete Ansteuerung der Hydraulikzylinder zwischen den Befestigungsvorrichtungen 9 der Laufradschwingen 3 und dem Rahmen 6A der landwirtschaftlichen Maschine sind die Hydraulikzylinder unabhängig voneinander in ihrer Länge veränderlich. Eine Längenveränderung der Hydraulikzylinder zwischen den Befestigungsvorrichtungen 9 der Laufradschwingen 3 und dem Rahmen 6A der landwirtschaftlichen Maschine ermöglicht das Einstellen eines für jedes Laufrad bzw. jede Laufradschwinge 3 die Einstellung eines individuellen Abstandes zum Rahmen 6A der landwirtschaftlichen Maschine. Somit ist jedes Laufrad individuell gegenüber dem Rahmen 6A der landwirtschaftlichen Maschine in seiner Höhe verstellbar.

Zusätzliche, den Laufradschwingen 3 zugeordnete Befestigungsvorrichtungen 10 dienen der schwenkbaren Befestigung eines ersten Endes weiterer Stellelemente, welche vorzugsweise als Hydraulikzylinder 11 ausgeführt sind. Das dem ersten Ende gegenüberliegende zweite Ende des Hydraulikzylinders 11 ist schwenkbar an der Radnabe 2 befestigt. Durch Längenänderung des Hydraulikzylinders 11 wird das Schwenken der Radnabe 2 bzw. des der Radnabe 2 zugeordneten Laufrads um eine aufrechte Achse bewirkt. Durch eine geeignete, aufeinander abgestimmte Ansteuerung der Hydraulikzylinder 11 wird auf diese Weise ein auf alle Laufräder der landwirtschaftlichen Maschine wirkendes Lenksystem geschaffen.

Bezüglich der Fahrtrichtung F ist das Fahrwerk 1 in einen vorderen 1A und einen hinteren 1B Fahrwerksbereich unterteilt. Der vordere und der hintere Fahrwerksbereich 1A,1B umfasst jeweils eine Hauptschwenkwelle 5, die jeweils paarweise daran angeordneten Laufradschwingen 3, die an den äußeren Enden der Hauptschwenkwelle 5 befestigten Verbindungsbauteile 6 sowie die zur Bewegung der Laufradschwingen 3 und/oder Laufräder notwendigen Stellelemente.

Der vordere Fahrwerksbereich 1A wird mittels eines mittleren Fahrwerksbereichs 1C mit dem hinteren Fahrwerksbereich 1B verbunden. Im gewählten Ausführungsbeispiel der Fig. 1 bis 6 wird der mittlere Fahrwerksbereich 1C von einer Bodenplatte 12 gebildet.

Alternativ oder zusätzlich zur Bodenplatte 12 kann der mittlere Fahrwerksbereich eine den vorderen 1A mit dem hinteren 1B Fahrwerksbereich verbindende, nicht dargestellte Rahmenkonstrunstruktion umfassen.

Der durch die Bodenplatte 12 gebildete mittlere Fahrwerksbereich verbindet den vorderen 1A und den hinteren 1B Fahrwerksbereich möglichst verwindungsfest miteinander. Somit wird in Zusammenwirken mit dem an den Verbindungsbauteilen 6 befestigten Rahmen 6A der landwirtschaftlichen Maschine ein besonders stabiles Fahrwerk 1 geschaffen.

Die Bodenplatte 12 bildet zumindest einen Teil des Unterbodens der landwirtschaftlichen Maschine. Dabei ist die Bodenplatte und/oder der Unterboden der landwirtschaftlichen Maschine im Wesentlichen hindernisfrei ausgeführt. Als Hindernisse werden Bauteilkanten, beispielsweise die quer zur Fahrtrichtung F verlaufenden Hauptschwenkwellen 5, und/oder von Bauteilen gebildete Freiräume angesehen. Es besteht die Gefahr, dass sich zu überfahrende Pflanzen eines zu pflegenden Bestandes in diesen Freiräumen verfangen und/oder mit Bauteilkanten kollidieren und dabei wesentlich beschädigt werden. Durch eine im Wesentlichen hindernisfreien Bodenplatte 12 und/oder einen im Wesentlichen hindernisfreien Unterboden, welcher zumindest teilweise durch die Bodenplatte 12 gebildet wird, wird die Gefahr der Beschädigung von Pflanzen erheblich reduziert.

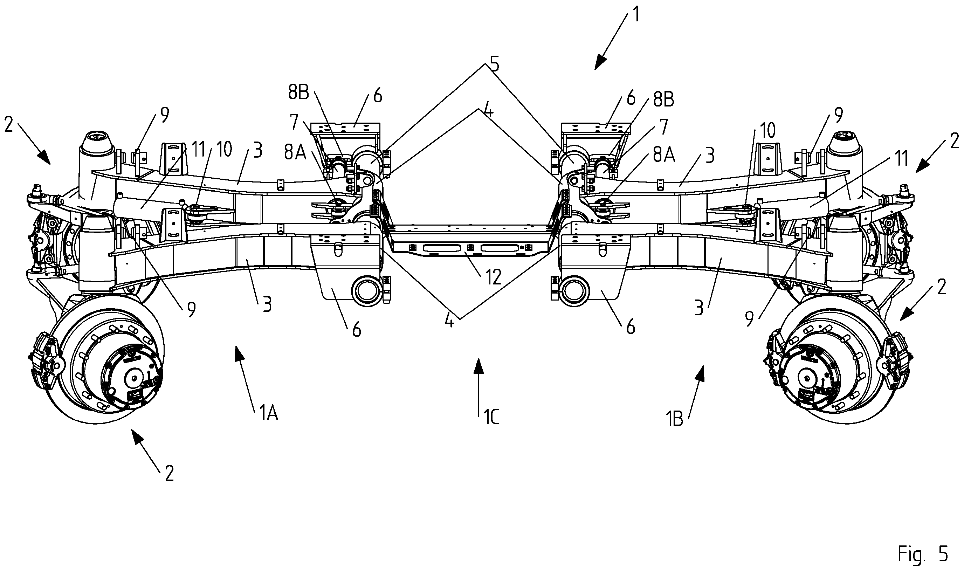

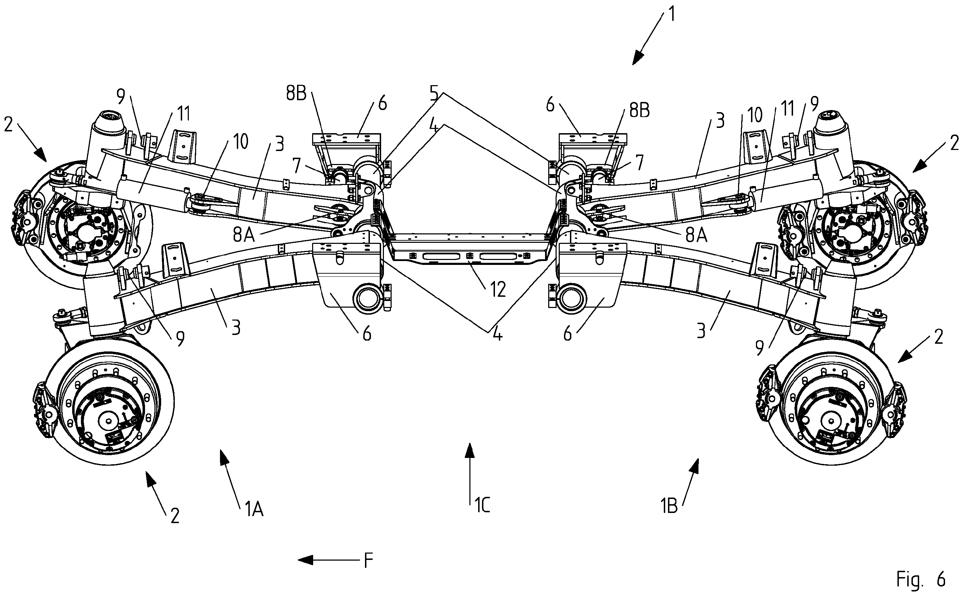

Das Fahrwerk 1 weist durch die beschriebenen Maßnahmen eine hohe Stabilität sowie eine hohe Flexibilität auf. Zum Ausgleich von Unebenheiten und/oder Neigungen einer landwirtschaftlichen Nutzfläche sind die Laufräder über die Laufradschwingen 3 mithilfe der vorgesehenen Stellelemente individuell in ihrer Höhe gegenüber dem Rahmen 6A der landwirtschaftlichen Maschine einstellbar, wie es beispielhaft in den Fig. 5 und 6 gezeigt ist. Somit wird ein laufruhiges Fahrwerk 1 geschaffen, welches über eine Niveauregulierung verfügt.

Ebenfalls ist der Einsatz der Maschine in verschiedenen Fahrgassensystemen möglich. Es können verschiedene Spurbreiten eingestellt werden. Zudem lassen sich die Laufräder über die Laufradschwingen 3 mittels der vorgesehenen Hydraulikzylinder 7 in einen individuellen Abstand zur Mitte der landwirtschaftlichen Maschine bringen. Dadurch ist beispielsweise ein spurversetztes Fahren oder der sogenannte Hundegang möglich.

## Patentansprüche

1. Landwirtschaftliche Maschine mit einem Rahmen (6A) welcher sich mittels Verbindungsbauteilen (6) über ein Laufräder aufweisendes Fahrwerk (1) auf dem Erdboden abstützt, wobei jedem Laufrad eine Laufradschwinge (3) zugeordnet und jede Laufradschwinge (3) unabhängig in aufrechter und/oder horizontaler Ebene relativ zum Rahmen (6A) bewegbar ist, **dadurch gekennzeichnet, dass** das Fahrwerk (1) einen vorderen und einen hinteren Fahrwerksbereich (1A, 1B) mit jeweils einer durchgehenden Hauptschwenkwelle (5) umfasst, dass bezüglich der Maschinenmitte jeweils gegenüberliegende Laufradschwingen (3) paarweise auf einer sich quer zur Fahrtrichtung (F) erstreckenden durchgehenden jeweils gemeinsamen Hauptschwenkwelle (5) angeordnet sind und zwar so, dass die vorderen Laufradschwingen (3) auf der vorderen durchgehenden Hauptschwenkwelle (5) und die hinteren Laufradschwingen (3) auf der hinteren durchgehenden Hauptschwenkwelle (5) angeordnet sind.

2. Landwirtschaftliche Maschine nach Anspruch 1, **dadurch gekennzeichnet, dass** jede Laufradschwinge (3) in ihrem oberen Bereich einen Anlenkbereich (4) aufweist, welcher die Hauptschwenkwelle (5) umgreifend ausgebildet ist.

3. Landwirtschaftliche Maschine nach zumindest einem der vorangegangenen Ansprüche, **dadurch gekennzeichnet, dass** jede Laufradschwinge (3) die Hauptschwenkwelle (5) umgreifend an den Hauptschwenkwellen (5) angelenkt und in aufrechter Ebene um die Hauptschwenkwelle (5) verschwenkbar ist.

4. Landwirtschaftliche Maschine nach zumindest einem der vorangegangenen Ansprüche, **dadurch gekennzeichnet, dass** jede Laufradschwinge (3) unabhängig entlang der Hauptschwenkwelle (5) verschiebbar gelagert ist.

5. Landwirtschaftliche Maschine nach zumindest einem der vorangegangenen Ansprüche, **dadurch gekennzeichnet, dass** geeignete Stellmittel (7) vorgesehen sind, um den Abstand der Laufräder relativ zum Rahmen (6A) in aufrechter und/oder horizontaler Richtung einzustellen.

6. Landwirtschaftliche Maschine nach einem der vorangegangenen Ansprüche, **dadurch gekennzeichnet, dass** die quer zur Fahrtrichtung (F) angeordneten Hauptschwenkwellen (5) miteinander verbunden sind.

7. Landwirtschaftliche Maschine nach einem der vorangegangenen Ansprüche, **dadurch gekennzeichnet, dass** zumindest jeweils zwei der quer zur Fahrtrichtung (F) angeordneten Hauptschwenkwellen (5) mittels einer Bodenplatte (12) verwindungsfest miteinander verbunden sind.

8. Landwirtschaftliche Maschine nach einem der vorangegangenen Ansprüche, **dadurch gekennzeichnet, dass** die Bodenplatte (12) zumindest einen Teil des Unterbodens darstellt.

9. Landwirtschaftliche Maschine nach einem der vorangegangenen Ansprüche, **dadurch gekennzeichnet, dass** zumindest jeweils zwei der quer zur Fahrtrichtung (F) angeordneten Hauptschwenkwellen (5) mittels einer Rahmenkonstruktion verwindungsfest miteinander verbunden sind.

10. Landwirtschaftliche Maschine nach zumindest einem der vorangegangenen Ansprüche, **dadurch gekennzeichnet, dass** die in Fahrtrichtung (F) vorderen und die in Fahrtrichtung (F) hinteren Laufradschwingen (3) jeweils paarweise auf einer gemeinsamen quer zur Fahrtrichtung (F) angeordneten Hauptschwenkwelle (5) angeordnet sind.

## Claims

1. Agricultural machine having a frame (6A) which is supported on the ground by means of connecting components (6) via a chassis (1) having wheels, wherein a wheel swingarm (3) is assigned to each wheel, and each wheel swingarm (3) can be moved independently in an upright and/or horizontal plane relative to the frame (6A), **characterized in that** the chassis (1) comprises a front and a rear chassis region (1A, 1B), each of which has a continuous main pivot shaft (5), **in that** wheel swingarms (3) which are in each case opposite with respect to the center of the machine are arranged in pairs on a continuous, in each case common main pivot shaft (5) extending transversely to the direction of travel (F), specifically in such a way that the front wheel swingarms (3) are arranged on the front continuous main pivot shaft (5), and the rear wheel swingarms (3) are arranged on the rear continuous main pivot shaft (5).

2. Agricultural machine according to claim 1, **characterized in that** each wheel swingarm (3) has, in its upper region, a coupling region (4) which is designed to encompass the main pivot shaft (5).

3. Agricultural machine according to at least one of the preceding claims, **characterized in that** each wheel swingarm (3) is coupled to the main pivot shafts (5) so as to encompass the main pivot shaft (5) and can be pivoted about the main pivot shaft (5) in an upright plane.

4. Agricultural machine according to at least one of the preceding claims, **characterized in that** each wheel swingarm (3) is mounted so as to be independently displaceable along the main pivot shaft (5).

5. Agricultural machine according to at least one of the preceding claims, **characterized in that** suitable adjusting means (7) are provided in order to adjust the distance of the wheels relative to the frame (6A) in the upright and/or horizontal direction.

6. Agricultural machine according to one of the preceding claims, **characterized in that** the main pivot shafts (5) arranged transversely to the direction of travel (F) are connected to one another.

7. Agricultural machine according to one of the preceding claims, **characterized in that** at least two in each case of the main pivot shafts (5) arranged transversely to the direction of travel (F) are connected to one another in a torsion-resistant manner by means of a base plate (12).

8. Agricultural machine according to one of the preceding claims, **characterized in that** the base plate (12) constitutes at least one part of the underbody.

9. Agricultural machine according to one of the preceding claims, **characterized in that** at least two in each case of the main pivot shafts (5) arranged transversely to the direction of travel (F) are connected to one another in a torsion-resistant manner by means of a frame construction.

10. Agricultural machine according to at least one of the preceding claims, **characterized in that** the front - in the direction of travel (F) - and the rear - in the direction of travel (F) - wheel swingarms (3) are in each case arranged in pairs on a common main pivot shaft (5) arranged transversely to the direction of travel (F).

## Revendications

1. Engin agricole comprenant un cadre (6A) qui est supporté sur le sol au moyen de composants de liaison (6) par l'intermédiaire d'un châssis (1) comportant des roues, dans lequel à chaque roue est associée une bielle oscillante de roue (3) et chaque bielle oscillante de roue (3) est mobile indépendamment dans le plan vertical et/ou horizontal par rapport au cadre (6A), **caractérisé en ce que** le châssis (1) comprend une zone de châssis avant et une arrière (1A, 1 B) avec respectivement un arbre de pivotement principal (5) traversant, **en ce que**, par rapport au milieu de la machine, des bielles oscillantes de roue (3) respectivement opposées sont disposées par paires sur un arbre de pivotement principal (5) commun respectif traversant s'étendant transversalement au sens de déplacement (F) et de telle sorte que les bielles oscillantes de roue (3) avant soient agencées sur l'arbre de pivotement principal (5) traversant avant et les bielles oscillantes de roue (3) arrière sur l'arbre de pivotement principal (5) traversant arrière.

2. Engin agricole selon la revendication 1, **caractérisé en ce que** chaque bielle oscillante de roue (3) présente dans sa zone supérieure une zone d'articulation (4), qui est conçue pour entourer l'arbre de pivotement principal (5).

3. Engin agricole selon au moins une des revendications précédentes, **caractérisé en ce que** chaque bielle oscillante de roue (3) est articulée et entoure l'arbre de pivotement principal (5) au niveau des arbres de pivotement principaux (5) et peut pivoter dans le plan vertical autour de l'arbre de pivotement principal (5).

4. Engin agricole selon au moins une des revendications précédentes, **caractérisé en ce que** chaque bielle oscillante de roue (3) est placée de façon indépendante le long de l'arbre de pivotement principal (5) de manière à pouvoir coulisser.

5. Engin agricole selon au moins une des revendications précédentes, **caractérisé en ce que** des moyens de réglage (7) adaptés sont prévus pour régler la distance des roues par rapport au cadre (6A) dans la direction verticale et/ou horizontale.

6. Engin agricole selon une quelconque des revendications précédentes, **caractérisé en ce que** les arbres de pivotement principaux (5) agencés transversalement au sens de déplacement (F) sont reliés les uns aux autres.

7. Engin agricole selon une quelconque des revendications précédentes, **caractérisé en ce qu'**au moins deux des arbres de pivotement principaux (5) agencés transversalement au sens de déplacement (F) sont reliés respectivement les uns aux autres au moyen d'une plaque de fond (12) de manière résistante à la torsion.

8. Engin agricole selon une quelconque des revendications précédentes, **caractérisé en ce que** la plaque de fond (12) représente au moins une partie du sous-plancher.

9. Engin agricole selon une quelconque des revendications précédentes, **caractérisé en ce qu'**au moins deux des arbres de pivotement principaux (5) agencés transversalement au sens de déplacement (F) sont reliés respectivement les uns aux autres au moyen d'une construction de cadre de manière résistante à la torsion.

10. Engin agricole selon au moins une des revendications précédentes, **caractérisé en ce que** les bielles oscillantes de roue (3) avant dans le sens de déplacement (F) et les bielles arrière dans le sens de déplacement (F) sont agencées respectivement par paires sur un arbre de pivotement principal (5) agencé transversalement au sens de déplacement (F).
